# EUROPEAN PATENT SPECIFICATION

(11) **EP 0 516 841 B1**
(45) Date of publication and mention of the grant of the patent: **06.03.1996**
(21) Application number: 92905320.5
(22) Date of filing: 12.12.1991
(51) Int. Cl.: G01F 1/42, G01F 15/00, F15D 1/02

(54) **ORIFICE SYSTEM**
DROSSELEINRICHTUNG
SYSTEME DE DIAPHRAGME

(30) Priority: 18.12.1990 US 629130; 18.12.1990 US 629150
(43) Date of publication of application: 09.12.1992
(73) Proprietor: DANIEL INDUSTRIES, INC.,, Houston, TX 77055 (US)
(72) Inventor: KENDRICK, Ray, Katy, TX 77450 (US); TATUM, Gary, Houston, TX 77066 (US)
(74) Representative: Dr. Elisabeth Jung Dr. Jürgen Schirdewahn Dipl.-Ing. Claus Gernhardt
(86) International application number: US9109535
(87) International publication number: WO9211464

(56) References cited:
- US-A- 652 177
- US-A- 1 892 906
- US-A- 1 938 460
- US-A- 2 687 748
- US-A- 3 176 773
- US-A- 3 273 805
- US-A- 3 986 721
- US-A- 4 593 915
- US-A- 4 633 911

## Description

### Field of the Invention

The invention relates to flow measurement devices, and in particular, to flow measurement devices using orifice plates and differential pressure as a basis of the flow measurement.

### Background of the Invention

Pipelines are used to transport fluids such as the production fluids from oil and gas wells. Because the measurement of these fluids is important, orifice plates are installed in special fittings which are installed in-line with pipeline sections. Some fittings may permit an orifice plate to be moved in and out of the flow stream without interruption of the flow through the pipeline. Other fittings permit orifice plates to be moved in and out of the pipeline only by interruption of flow.

The use of orifice measurement for flow has been known since ancient times. The basis of orifice measurement is to place a plate in a flow line, with the plate having an opening which is smaller than the opening of the flow line. By reading the upstream and downstream pressure on either side of the plate, and calculating the difference of pressure between the upstream and downstream pressures, one can infer the rate of flow in the pipe line.

The accuracy of the measurement given by the orifice is dependent on many factors, including the ratio of the orifice hole to the diameter of the pipe, the length of straight run of the upstream and downstream pipe or tube sections on either side of the orifice, the eccentricity of the orifice hole in the pipe or tube and the like. The standards to assure accuracy have been governed by ANSI Standard ANSI/API 2530, which are wholly adequate for flow measurement.

Nevertheless, there has been a series of meetings to significantly revise API/AGA standards, which would constitute a revision to Manual of Petroleum Measurement Standards, Chapter 14, "Natural Gas Fluids Measurement", which includes Section 3, "Concentric, Square-edged Orifice Meters". The revised Section 3 may become an update and would then become a revision to ANSI Standard ANSI/API 2530; i.e.: AGA Report No. 3.

These new requirements probably will be adopted by some companies even though additional costs will be attendant with mechanical changes associated with the requirements. The new requirements require greater control on centering (concentricity or eccentricity) of orifice plates as installed in any holding device. However, most orifice plate holding devices other than flanges require some manner of plate/seal/carrying device combination. The most common seal of this type is an elastomeric seal which is assembled around the orifice plate (see e.g. US-A- 4 593 915 which discloses the preamble of independent claims 1, 9 and 23). This type of seal may not yield the greater control of centering required by the new revisions with respect to installed assemblies. This is due to molding tolerances.

There is, therefore, needed an orifice plate and seal combination that permits greater control of concentricity at installation while still permitting the current common sealing aspects presently in use.

### Summary of the Invention

The present invention discloses an orifice plate which can be installed with great control on concentricity while allow sealing features of a molded rubber or other elastomeric or plastic or metal seal. Reliefs are provided at points around the circumference of the seal which allow the orifice plate outer edge to protrude into the reliefs. A plate carrying device with matching protrusions to the reliefs can therefore closely contact the orifice plate exposed edges, allowing very close metal-to--metal containment of the entire assembly, thereby providing the necessary concentricity control. However, the elastomeric or plastic seal at the points of relief are not affected by the relief; these services are still available to provide their normal sealing functions. Other sealing devices can be similarly designed to allow these multi-point orifice plate protrusion contact points, thus making this carrier/seal/plate assembly universal for multiple uses.

### Brief Description of the Drawings

For a further understanding of the nature and objects of the present invention, reference is made to the following drawings in which like parts are given like reference numbers and wherein:
Figure 1 illustrates a sectional elevation view of the preferred embodiment of the present invention in an orifice fitting;
Figure 2 is a front view of the preferred embodiment of the present invention of a plate carrying device for use within an orifice fitting;
Figure 3 is a cross-sectional view of the embodiment of the present invention taken along section lines 3-3 of Figure 2;
Figure 4 is a front view of the orifice plate and seal of the preferred embodiment of the present invention;
Figure 5 is a cross-sectional view of the embodiment of the present invention taken along section lines 5-5 of Fig. 4;
Figure 6 illustrates a detail of the orifice plate and seal of the preferred embodiment of the present invention;
Figure 7 illustrates a detail of the orifice plate and seal interfaced with a plate carrying device of the preferred embodiment of the present invention;
Figure 8 illustrates an exploded view of an orifice plate and an alternate seal of the present invention;
Figure 9 is a front cross-sectional view of an orifice plate and an alternate seal with mounting bearings of the preferred embodiment of the present invention; and
Figure 10 is a side cross-sectional view of Fig. 9 taken along section lines 10-10 Fig. 9.

### Description of the Embodiments

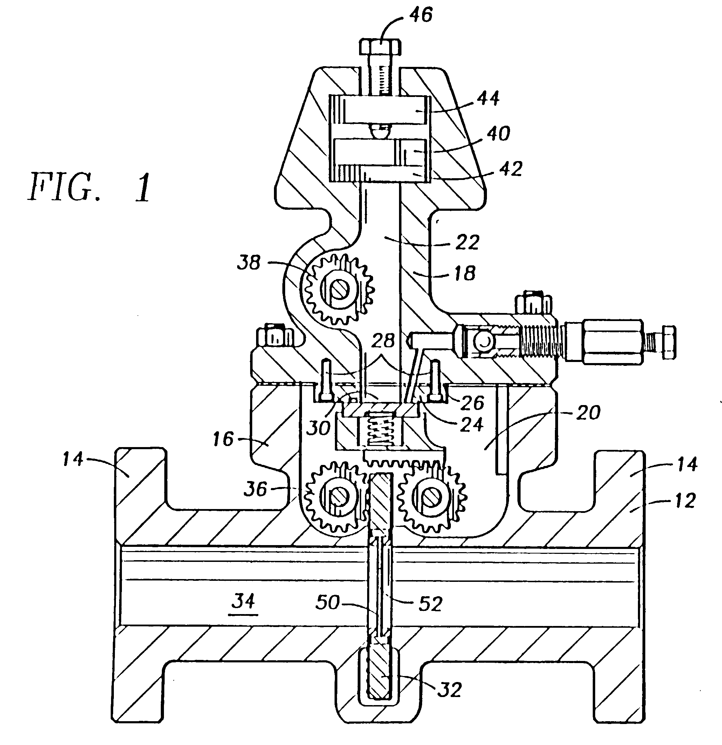

The present invention discloses an orifice plate and method for centralizing the orifice plate in a fitting connected to a pipeline. Figure 1 illustrates an orifice fitting 12. As illustrated, orifice fitting 12 includes flanges 14 which are used to bolt fitting 12 to sections of the pipeline (not shown). Alternately, the orifice fitting 12 may include weld bevels (not shown) and may be welded directly into the pipeline, or a combination of a flange and a weld bevel may be used to place the fitting into the pipeline.

Orifice fitting 12 also includes body 16 and top 18. Body 16 encloses lower chamber 20 which is in fluid communication with fluid 34 from the interior of the pipeline, and top 18 encloses upper chamber 22. Valve seat 24 and valve seat gasket 26 are connected to top 18 with valve seat screws 28. Aperture 30 defines an opening through valve seat 24 and valve seat gasket 26 which permits the communication of fluids therethrough.

Valve seat 24 is illustrated as a generally rectangular plate having a lower base or surface which substantially constitutes a flat plane surface. Valve seat 24 can be constructed from alloy iron or other material. Valve seat gasket 26 can be constructed from a gasket material, such as graphite asbestos, and valve seat screws 28 can be constructed from a chemically treated steel or alloy.

As illustrated in Figure 1, orifice plate carrying device 32 is located in communication with pipeline fluid 34. Orifice plate carrying device 32 can be raised and lowered within orifice fitting 12 by operating lower drive 36, comprising a gear shaft and pinions, and upper drive 38, also comprising a gear shaft and pinions.

Upper chamber 22 is sealed from the ambient environment with sealing bar 40 and sealing bar gasket 42 which are retained with clamping bar 44 and clamping bar screws 46.

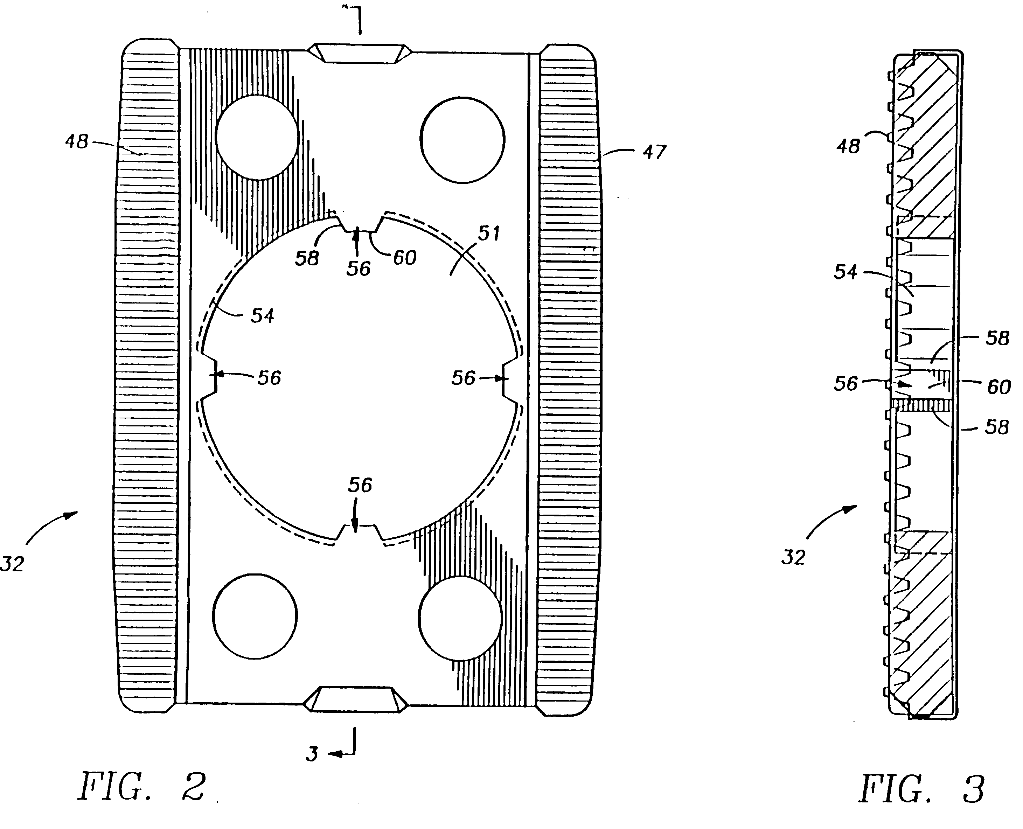

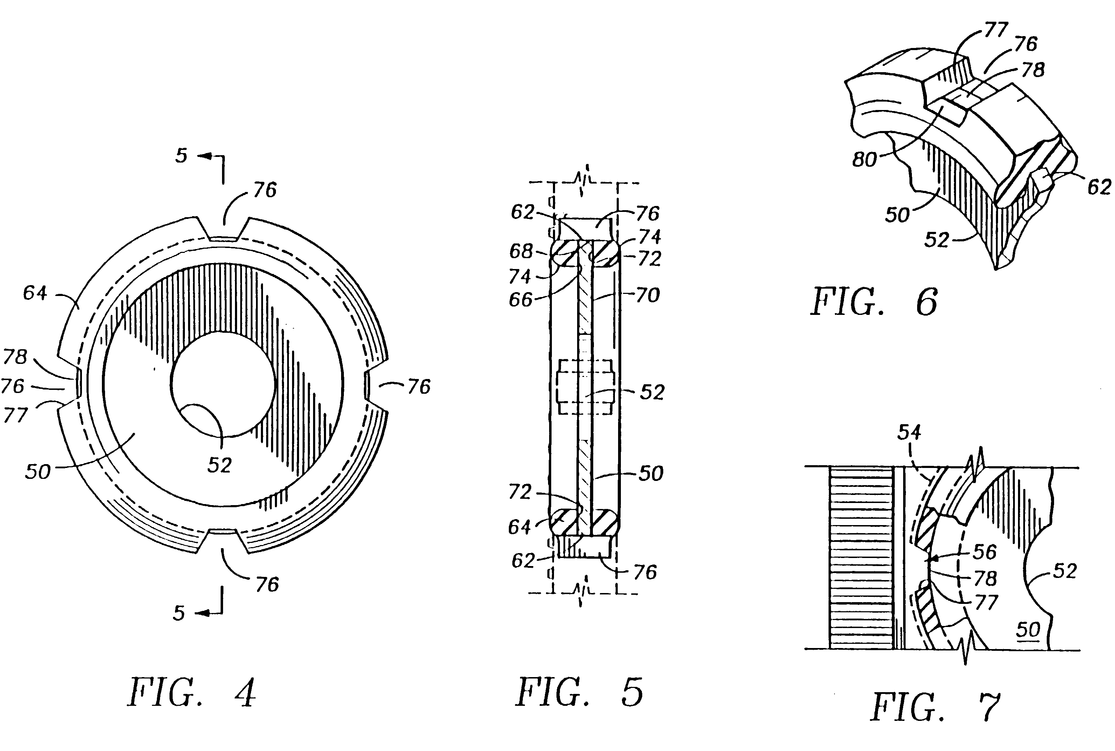

As illustrated in Figure 2, orifice plate carrying device 32 comprises parallel racks 47, 48, adapted to interface with lower drive 36 and upper drive 38. An orifice plate 50 which normally has a center hole 52 as best seen in Figures 4, 5, 7, 8, 9 and 10 is located interior to racks 47, 48. Orifice plate carrying device 32 has an opening 51 to receive orifice plate 50 therein.

Orifice plate carrier 32 has an inner circumference 54 for opening 51 which is generally circular in shape but includes ears or protrusions 56 projecting into opening 51. Ears 56 may be generally trapezoidal in shape, having sloping sides 58 and interior surface 60.

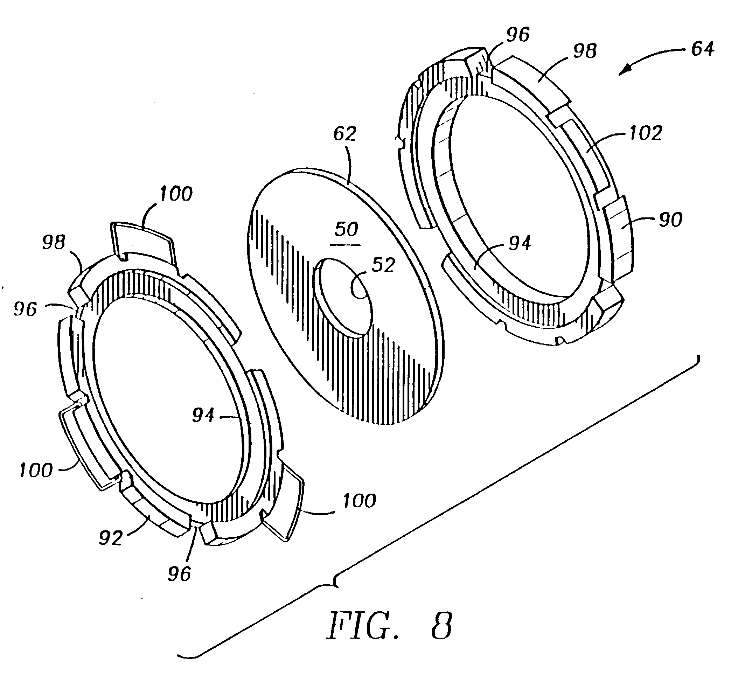

As best seen in Figure 8, orifice plate 50 is generally circular in shape having outer circumference 62. This is a "universal" plate standard, however the invention may be used with any plate. For example, plate 50 may have extensions which are non-universal, to fit in grooves of a plate holder.

In the preferred embodiment of the present invention and in the alternate embodiments, orifice plate 50 is preferably made of metal and orifice plate carrying device 32 is also preferably made of metal, including ears or protrusions 56.

As best seen in Figures 4 and 5, orifice plate 50 is normally surrounded by an elastomeric gasket 64, such as rubber. Rubber gasket 64 includes slit 66 in the interior of rubber gasket 64, shaped and sized to receive circumference 62 within slit 66, such that outer circumference 62 abuts inner circumference 68 of seal 64. The sides 70 of plate 50 are circumscribed at their extreme outer surfaces immediately adjacent to circumference 62 by interior sides 72 of seal 64. Seal 64 is shaped such that its two exterior side or face surfaces 74 form a seal with the interior surfaces of fitting 12. Grooves or reliefs 76 having sides 77 are formed by molding or cutting in the exterior of seal 64 to expose a portion or tips 78 of the outer circumference 62 of orifice plate 50. Such sides 77 may be slanted. See Figure 6. The grooves or reliefs 76 correspond in shape and dimension and number and spacing to match ears or protrusions 56. The tips 78 which protrude through the bottoms 80 of seal 64 abut the end 60 of inner circumference 54 ears or protrusions 56. The orifice plate 50 and seal 64 mounted on it are sized to fit snugly within opening 51 such that tips 78 abut ends 60 of ears 56, thereby permitting accurate centering of orifice plate 50, and accordingly hole 52, within the orifice plate carrying device 32.

In the preferred embodiment, the sealing device 64 may be any elastomeric material, such as rubber. Such elastomeric material may be vulcanized onto orifice plate 50 or may be form-fitted around orifice plate 50 as is appropriate depending on size. Alternately, as shown in Figure 8, there are some sealing materials that do not vulcanize well and do not have very good elastic properties, such as plastics, for example Teflon type materials, and metal.

In such situations as shown in Figure 8, seal 64 may be formed of two parts 90, 92, each of which has an interior portion to receive orifice plate 50 therein. Each side would also have grooves or reliefs 96 cut into the exterior circumference 98 of each side through which the tips of circumference 62 would protrude to interface with ears or protrusions 56. Accordingly grooves or reliefs 96, like grooves or reliefs 76, would correspond not only with each other but would correspond in shape, dimension, number and spacing to match ears or protrusions 56. The sides 90, 92 would be coupled by, for example, clips 100 affixed to side 92 engaging extensions 102 on the circumference 98 of side 90.

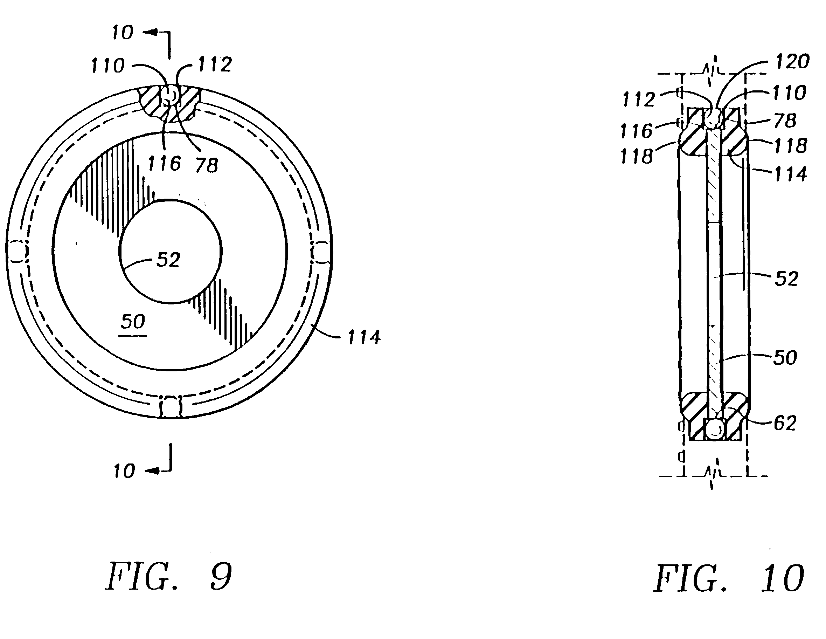

As another alternate, and as shown in Figures 9 and 10, tips 78 of orifice plate 50 may abut ball bearings 110 fitted into a hole or an alternate groove 112 of a seal 114. In such a circumstance grooves or holes 112 would have substantially vertical sides 116, instead of the slanted sides 77 of seal 64. Vertical sides 116 help hold ball bearings 110 in place. Seal 114 would have sealing sides 118 for forming a seal with the interior surfaces of fitting 12. Because ball bearings 110 may be made with very tight tolerances, the concentricity requirement of the orifice plate 50 would still be met. Further, in this case, the plate carrier 32 would not include ears 56 but would incorporate a close bored internal diameter 120 of such tolerance as to allow the ball bearing 110 to provide an intermediate metal interface between the plate outer circumference 62 and the plate carrier internal diameter 120.

The embodiments set forth herein are merely illustrative and do not limit the scope of the invention or the details therein. For example, the seals may be of a type shown in Figure 8 but may be metal. Additionally, although the plate carrying device illustrated is used for a fitting that may be moved in and out of the flow stream without interruption of the flow through the pipeline, it can be used with any fitting including those that may be moved in and out of the pipeline only by interruption of flow. Also, ball bearings 110 could be any intermediate interface, including metal and plastic, between the plate carrier and the orifice plate, including a piece molded in the seal.

Further, the number of grooves illustrated should not be considered limiting and more grooves could be used, for example with larger plate sizes. Also, for elastomers, the seal may be vulcanized or fitted onto the orifice plate.

## Claims

1. An orifice system for use with an orifice plate carrier, comprising:
an orifice (52) plate (50) having an outer circumferences (62);
seal means (64;114) for engaging said outer circumference of said orifice plate, said seal means including an outer sealing surface (74;118); characterized by:
said seal means having an outer circumferential end surface having reliefs (76;96;112) therein to expose portions (78) of said outer circumference (62) of said orifice plate.

2. An orifice system as recited in Claim 1, wherein said seal means (64;114) is comprised of an elastomer.

3. An orifice system as recited in Claim 2 wherein said elastomer is vulcanized onto said orifice plate (50).

4. An orifice system as recited in Claim 2, wherein said elastomer is fitted onto said orifice plate (50).

5. An orifice system as recited in Claim 1, wherein said seal means is comprised of a plastic, having two sides (90,92) sized to receive said orifice plate (50) and means (100) for connecting said sides with said plate therebetween.

6. An orifice system as recited in Claim 1, wherein said reliefs (76) include three grooves.

7. An orifice system as recited in Claim 1, wherein said reliefs (76) include four grooves.

8. An orifice system as recited in Claim 1 , wherein said outer sealing surface (74;118) is a face sealing surface.

9. An orifice plate holding system, comprising: an orifice (52) plate (50) having an outer circumference (62);
a seal (64;114) surrounding said outer circumference, said seal having at least one outer sealing surface (74;118) and an outer nonsealing surface; a plate carrying device (32) having an interior opening (51) sized to receive said orifice plate and said surrounding seal therein; characterized by : said nonsealing surface having grooves (76;96;112) therein of sufficient depth to permit portions (78) of said outer circumference (62) to protrude through said grooves; means (56;110) for interacting with said protruding outer circumference to center said orifice plate in said interior opening (51).

10. The orifice plate holding system as recited in Claim 9, wherein said outer sealing surface (74;118) is a face sealing surface and said non-sealing surface is a circumferential surface.

11. An orifice plate holding system as recited in Claim 9, wherein said means is mounted on said plate carrying device and includes ears (56) having ends, said ends abutting said protruding outer circumference (62).

12. An orifice plate holding system as recited in Claim 11, wherein there are four ears (56).

13. An orifice plate holding system as recited in Claim 11, wherein there are three ears (56).

14. An orifice plate holding system as recited in Claim 9, wherein said interior opening (51) abuts said outer sealing surface.

15. An orifice plate holding system as recited in Claim 9, wherein said seal includes two parts (90,92) which contain said orifice plate (50) therebetween.

16. An orifice plate holding system as recited in Claim 15, wherein said two parts (90,92) sandwich said orifice plate therebetween.

17. An orifice plate holding system as recited in Claim 15, wherein there are included means (100) for connecting said two parts together.

18. An orifice plate holding system as recited in Claim 15, wherein said parts (90,92) are comprised of plastics.

19. An orifice plate holding system as recited in claim 15, wherein said parts (90,92) are comprised of metal.

20. An orifice plate holding system as recited in Claim 9, wherein said seal (64;114) is comprised of elastomer.

21. An orifice plate holding system as recited in Claim 20, wherein said seal (64;114) is vulcanized rubber attached to said orifice plate.

22. An orifice plate holding system as recited in Claim 20, wherein said seal (64;114) is rubber in which said orifice plate is inserted.

23. An orifice installation for measuring flow in pipes in which fluids may flow, comprising:
an orifice (52) plate (50) having an outer circumference (62); a seal (64;114) surrounding said outer circumference;
a plate carrying device (32) having an interior opening (51) sized to receive said orifice plate and said surrounding seal;
a fitting (12) for holding said plate, said seal having a sealing surface (74;118) sealingly engaging said fitting and a nonsealing surface;
characterized by: said seal having grooves (76;96;112) in said nonsealing surface exposing said outer circumference (62);
means (56;110) for close tolerance contacting of said plate carrying device with said exposed outer circumference (62) to center said orifice plate in said plate carrying device.

24. An orifice system as recited in claim 1, wherein there is further included an intermediate interface (110) located in said reliefs (112) and abutting at least some of said exposed portions (78) of said outer circumference of said orifice plate.

25. An orifice system as recited in Claim 24, wherein said intermediate interface (110) is comprised of a hard substance.

26. An orifice system as recited in Claim 25, wherein said hard substance is made of metal.

27. An orifice system as recited in Claim 25, wherein said hard substance is made of plastic.

28. An orifice system as recited in Claim 24, wherein said reliefs include holes (112).

29. An orifice system as recited in Claim 28, wherein said intermediate interface (110) is located in at least three of said holes.

30. An orifice plate holding system as recited in claim 9, wherein said means includes an intermediate interface (110) located in said grooves (112) and abutting at least a portion (78) of said protruding outer circumference.

31. An orifice plate holding system as recited in claim 30, wherein said means includes an intermediate interface (110) located in said grooves (112) and abutting said interior opening (51) of said plate carrying device.

32. An orifice plate holding system as recited in Claim 31, wherein said intermediate interface (110) is comprised of a hard substance.

33. An orifice plate holding system as recited in Claim 32, wherein said hard substance is made of metal.

34. An orifice plate holding system as recited in Claim 32, wherein said intermediate interface is made of plastic.

35. An orifice plate holding system as recited in Claim 32, wherein said interior opening (51) abuts said intermediate interface (110).

36. An orifice plate holding system as recited in Claim 35, wherein said interior opening (51) includes a close bored internal diameter.

37. An orifice plate holding system as recited in Claim 30, wherein said grooves (112) includes holes.

38. An orifice plate holding system as recited in Claim 37, wherein said intermediate interface (110) is located in at least three of said holes.

39. An orifice plate holding system as recited in Claim 37, wherein said intermediate interface (110) is located in at least four of said holes.

40. An orifice installation as recited in Claim 23, wherein said means including intermediate means (110) abutting said exposed outer circumference (62) of said orifice plate and said interior opening (51) of said plate carrying device.

## Patentansprüche

1. Blendensystem zur Verwendung mit einem Blendenplattenträger, umfassend:
eine Blendenplatte (52,50) die einen Außenumfang (62) hat;
eine Dichtungseinrichtung (64;114) für Eingriff mit dem Außenumfang der Blendenplatte, wobei die Dichtungseinrichtung eine äußere Dichtungsfläche (74;118) hat, dadurch gekennzeichnet, daß
die Dichtungseinrichtung eine äußere Umfangsendfläche hat, die Aussparungen (76;96;112) in ihr hat, um Teile (78) des äußeren Umfangs (62) der Blendenplatte freizulegen.

2. Blendensystem nach Anspruch 1, in welchem die Dichtungseinrichtung (64;114) ein Elastomer aufweist.

3. Blendensystem nach Anspruch 2, in welchem das Elastomer auf die Blendenplatte (50) vulkanisiert ist.

4. Blendensystem nach Anspruch 2, in welchem das Elastomer auf die Blendenplatte (50) montiert ist.

5. Blendensystem nach Anspruch 1, in welchem die Dichtungseinrichtung aus einem Kunststoff gebildet ist und zwei Seiten (90,92) hat, die so gestaltet sind, daß sie die Blendenplatte (50) aufnehmen, und eine Einrichtung (100) aufweist zum Verbinden der Seiten mit der Platte dazwischen.

6. Blendensystem nach Anspruch 1, in welchem die Aussparungen (76) drei Nuten umfassen.

7. Blendensystem nach Anspruch 1, in welchem die Aussparungen (76) vier Nuten umfassen.

8. Blendensystem nach Anspruch 1, in welchem die äuβere Dichtungsfläche (74;118) eine flächige Dichtungsfläche ist.

9. Blendenplatten-Haltesystem, umfassend:
eine Blendenplatte (52,50), die einen äußeren Umfang (62) hat;
eine den äußeren Umfang umgebende Dichtung (64;114), die wenigstens eine äußere Dichtungsfläche (74;118) und eine nichtdichtende Außenfläche hat;
eine Plattentrageinrichtung (32), die eine innere Öffnung (51) hat, die so gestaltet ist, daß sie die Blendenplatte und die umgebende Dichtung darin aufnimmt; dadurch gekennzeichnet, daß
die nichtdichtende Fläche Nuten (76;96;112) in ihr hat mit ausreichender Tiefe um zu ermöglichen, daß Teile (78) des äußeren Umfangs (62) durch die Nuten vorragen, und
eine Einrichtung (56;110) vorgesehen ist zum Zusammenwirken mit dem vorragenden äußeren Umfang, um die Blendenplatte in der inneren Öffnung (51) zu zentrieren.

10. Blendenplatten-Haltesystem nach Anspruch 9, in welchem die äußere Dichtungsfläche (74;118) eine flächenförmige Dichtungsfläche und die nichtdichtende Fläche eine Umfangsfläche ist.

11. Blendenplatten-Haltesystem nach Anspruch 9, in welchem die genannte Einrichtung an der Plattentrageinrichtung angebracht ist und Ansätze (56) hat, die Enden haben, wobei die Enden an dem vorragenden Außenumfang (62) anliegen.

12. Blendenplatten-Haltesystem nach Anspruch 11, in welchem vier Ansätze (56) vorgesehen sind.

13. Blendenplatten-Haltesystem nach Anspruch 11, in welchem drei Ansätze (56) vorgesehen sind.

14. Blendenplatten-Haltesystem nach Anspruch 9, in welchem die innere Öffnung (51) sich gegen die äußere Dichtungsfläche legt.

15. Blendenplatten-Haltesystem nach Anspruch 9, in welchem die Dichtung zwei Teile (90,92) umfaßt, welche die Blendenplatte (50) zwischen sich enthalten.

16. Blendenplatten-Haltesystem nach Anspruch 15, in welchem die beiden Teile (90,92) die Blenden-Platte zwischen sich einklemmen.

17. Blendenplatten-Haltesystem nach Anspruch 15, in welchem eine Einrichtung (100) vorgesehen ist, um die beiden Teile miteinander zu verbinden.

18. Blendenplatten-Haltesystem nach Anspruch 15, in welchem die Teile (90,92) aus Kunststoff bestehen.

19. Blendenplatten-Haltesystem nach Anspruch 15, in welchem die Teile (90,92) aus Metall bestehen.

20. Blendenplatten-Haltesystem nach Anspruch 9, in welchem die Dichtung (64;114) aus einem Elastomer besteht.

21. Blendenplatten-Haltesystem nach Anspruch 20, in welchem die Dichtung (64;114) an der Blendenplatte angebrachter vulkanisierter Kautschuk ist.

22. Blendenplatten-Haltesystem nach Anspruch 20, in welchem die Dichtung (64;114) Kautschuk ist, in den die Blenden-Platte eingesetzt ist.

23. Blendeninstallation zum Messen des Flusses in Rohren, in denen Fluide fließen können, umfassend:
eine Blendenplatte (52,50), die einen Außenumfang (62) hat;
eine Dichtung (64;114), welche den Außenumfang umgibt;
eine Plattentrageinrichtung (32), die eine innere Öffnung (51) hat, die so gestaltet ist, daß sie die Blenden-Platte und die umgebende Dichtung aufnimmt;
ein Anschlußstück (12) zum Halten der Platte, wobei die Dichtung eine Dichtungsfläche (74;118), welche mit dem Anschlußstück dichtend im Eingriff steht und eine nichtdichtende Fläche hat,
dadurch gekennzeichnet, daß
die Dichtung Nuten (76;96;112) in der nichtdichtenden Fläche hat, welche den Außenumfang (62) freilegen; und
eine Einrichtung (56;110) vorgesehen ist für Berührung der Plattentrageinrichtung mit enger Toleranz mit dem frei liegenden Außenumfang (62), um die Blenden-Platte in der Plattentrageinrichtung zu zentrieren.

24. Blendensystem nach Anspruch 1. in welchem weiterhin eine Zwischenfläche (110) vorgesehen ist, die in den Aussparungen (112) angeordnet ist und sich gegen wenigstens gewisse der frei liegenden Teile (78) des Außenumfangs der Blenden-Platte legt.

25. Blendensystem nach Anspruch 24, in welchem die Zwischenfläche (110) aus einer harten Substanz besteht.

26. Blendensystem nach Anspruch 25, in welchem die harte Substanz aus Metall gebildet ist.

27. Blendensystem nach Anspruch 25, in welchem die harte Substanz aus Kautschuk gebildet ist.

28. Blendensystem nach Anspruch 24, in welchem die Aussparungen Löcher (112) umfassen.

29. Blendensystem nach Anspruch 28, in welchem die Zwischenfläche (110) in wenigstens dreien der Löcher angeordnet ist.

30. Blendenplatten-Haltesystem nach Anspruch 9, in welchem die genannte Einrichtung eine Zwischenfläche (110) umfaßt, die in den Nuten (112) angeordnet ist und sich gegen wenigstens einen Teil (78) des vorragenden Außenumfanges legt.

31. Blendenplatten-Haltesystem nach Anspruch 30, in welchem die genannte Einrichtung eine Zwischenfläche (110) umfaßt, die in den Nuten (112) angeordnet ist und sich gegen die innere Öffnung (51) der Plattentrageinrichtung legt.

32. Blendenplatten-Haltesystem nach Anspruch 31, in welchem die Zwischenfläche (110) aus einer harten Substanz besteht.

33. Blendenplatten-Haltesystem nach Anspruch 32, in welchem die harte Substanz aus Metall gebildet ist.

34. Blendenplatten-Haltesystem nach Anspruch 32, in welchem die Zwischenfläche aus Kunststoff gebildet ist.

35. Blendenplatten-Haltesystem nach Anspruch 32, in welchem die innere Öffnung (51) sich gegen die Zwischenfläche (110) legt.

36. Blendenplatten-Haltesystem nach Anspruch 35, in welchem die innere Öffnung (51) einen engen gebohrten Innendurchmesser umfaßt.

37. Blendenplatten-Haltesystem nach Anspruch 30, in welchem die Nuten (112) Löcher umfassen.

38. Blendenplatten-Haltesystem nach Anspruch 37, in welchem die Zwischenfläche (110) in wenigstens dreien der Löcher angeordnet ist.

39. Blendenplatten-Haltesystem nach Anspruch 37, in welchem die Zwischenfläche (110) in wenigstens vieren der Löcher angeordnet ist.

40. Blendeninstallation nach Anspruch 23, in welcher die genannte Einrichtung eine Zwischeneinrichtung (110) umfaßt, die sich gegen den frei liegenden Außenumfang (62) der Blenden-Platte und die innere Öffnung (51) der Plattentrageinrichtung legt.

## Revendications

1. Système de diaphragme destiné à être utilisé avec un support de plaque de diaphragme, comprenant :
une plaque (50) de diaphragme (52) ayant une circonférence extérieure (62) ;
un moyen de joint (64; 114) pour engager ladite circonférence extérieure de ladite plaque de diaphragme, ledit moyen de joint comportant une surface d'étanchéité extérieure (74; 118) ; caractérisé en ce que :
ledit moyen de joint a une surface d'extrémité circonférentielle extérieure comprenant des reliefs (76; 96; 112) pour exposer des portions (78) de ladite circonférence extérieure (62) de ladite plaque de diaphragme.

2. Système de diaphragme selon la revendication 1, dans lequel ledit moyen de joint (64; 114) se compose d'un élastomère.

3. Système de diaphragme selon la revendication 2, dans lequel ledit élastomère est vulcanisé sur ladite plaque (50) de diaphragme.

4. Système de diaphragme selon la revendication 2, dans lequel ledit élastomère est fixé sur ladite plaque (50) de diaphragme.

5. Système de diaphragme selon la revendication 1, dans lequel ledit moyen de joint se compose d'un plastique, ayant deux côtés (90, 92) dimensionnés de façon à recevoir ladite plaque (50) de diaphragme, et des moyens (100) pour raccorder lesdits côtés, avec ladite plaque entre eux.

6. Système de diaphragme selon la revendication 1, dans lequel lesdits reliefs (76) comportent trois gorges.

7. Système de diaphragme selon la revendication 1, dans lequel lesdits reliefs (76) comportent quatre gorges.

8. Système de diaphragme selon la revendication 1, dans lequel ladite surface d'étanchéité extérieure (74; 118) est une surface destinée à former un joint de surface.

9. Système pour maintenir une plaque de diaphragme, comprenant :
une plaque (50) de diaphragme (52) ayant une circonférence extérieure (62) ;
un joint (64; 114) entourant ladite circonférence extérieure, ledit joint ayant au moins une surface d'étanchéité extérieure (74, 118) et une surface extérieure ne constituant pas de joint ;
un dispositif (32) de support de plaque ayant une ouverture intérieure (51) dimensionnée de façon à recevoir en elle ladite plaque de diaphragme et ledit joint périphérique;
caractérisé en ce que :
ladite surface ne constituant pas de joint comprend des gorges (76; 96; 112) de profondeur suffisante pour permettre à des portions (78) de ladite circonférence extérieure (62) de faire saillie à travers lesdites gorges ;
un moyen (56; 110) pour coopérer avec ladite circonférence extérieure en saillie pour centrer ladite plaque de diaphragme dans ladite ouverture intérieure (51).

10. Système pour maintenir une plaque de diaphragme selon la revendication 9, dans lequel ladite surface d'étanchéité extérieure (74; 118) est une surface destinée à former un joint de surface et ladite surface ne constituant pas de joint est une surface circonférentielle.

11. Système pour maintenir une plaque de diaphragme selon la revendication 9, dans lequel ledit moyen est monté sur ledit dispositif de support de plaque et comporte dès oreilles (56) ayant des extrémités, lesdites extrémités étant en butée contre ladite circonférence extérieure en saillie (62).

12. Système pour maintenir une plaque de diaphragme selon la revendication 11, dans lequel il y a quatre oreilles (56).

13. Système pour maintenir une plaque de diaphragme selon la revendication 11, dans lequel il y a trois oreilles (56).

14. Système pour maintenir une plaque de diaphragme selon la revendication 9, dans lequel ladite ouverture intérieure (51) est en butée contre ladite surface d'étanchéité extérieure.

15. Système pour maintenir une plaque de diaphragme selon la revendication 9, dans lequel ledit joint comporte deux parties (90, 92) qui contiennent entre elles ladite plaque (50) de diaphragme.

16. Système pour maintenir une plaque de diaphragme selon la revendication 15, dans lequel lesdites deux parties (90, 92) prennent en sandwich entre elles ladite plaque de diaphragme.

17. Système pour maintenir une plaque de diaphragme selon la revendication 15, dans lequel sont inclus des moyens (100) pour raccorder lesdites deux parties ensemble.

18. Système pour maintenir une plaque de diaphragme selon la revendication 15, dans lequel lesdites parties (90, 92) se composent de plastique.

19. Système pour maintenir une plaque de diaphragme selon la revendication 15, dans lequel lesdites parties (90, 92) se composent de métal.

20. Système pour maintenir une plaque de diaphragme selon la revendication 9, dans lequel ledit joint (64; 114) se compose d'élastomère.

21. Système pour maintenir une plaque de diaphragme selon la revendication 20, dans lequel ledit joint (64; 114) est du caoutchouc vulcanisé attaché à ladite plaque de diaphragme.

22. Système pour maintenir une plaque de diaphragme selon la revendication 20, dans lequel ledit joint (64; 114) est du caoutchouc dans lequel est insérée ladite plaque de diaphragme.

23. Installation de diaphragme pour mesurer le flux dans des canalisations dans lesquelles du fluide peut s'écouler, comprenant :
une plaque (50) de diaphragme (52) ayant une circonférence extérieure (62) ;
un joint (64; 114) entourant ladite circonférence extérieure ;
un dispositif (32) de support de plaque ayant une ouverture intérieure (51) dimensionnée de façon à recevoir ladite plaque de diaphragme et ledit joint périphérique ;
un raccord (12) pour maintenir ladite plaque, ledit joint ayant une surface d'étanchéité (74; 118) engageant de manière étanche ledit raccord et une surface ne constituant pas de joint ;
caractérisée par :
le fait que ledit joint présente des gorges (76; 96; 112) dans ladite surface ne constituant pas de joint, exposant ladite circonférence extérieure (62) ;
le moyen (56; 110) pour mettre en contact avec des tolérances étroites ledit dispositif de support de plaque avec ladite circonférence extérieure exposée (62), pour centrer ladite plaque de diaphragme dans ledit dispositif de support de plaque.

24. Système de diaphragme selon la revendication 1, dans lequel est encore incluse une interface intermédiaire (110) située dans lesdits reliefs (112) et étant en butée contre au moins certaines desdites portions exposées (78) de ladite circonférence extérieure de ladite plaque de diaphragme.

25. Système de diaphragme selon la revendication 24, dans lequel ladite interface intermédiaire (110) se compose d'une substance dure.

26. Système de diaphragme selon la revendication 25, dans lequel ladite substance dure est en métal.

27. Système de diaphragme selon la revendication 25, dans lequel ladite substance dure est en plastique.

28. Système de diaphragme selon la revendication 24, dans lequel lesdits reliefs comportent des trous (112).

29. Système de diaphragme selon la revendication 28, dans lequel ladite interface intermédiaire (110) est située dans au moins trois desdits trous.

30. Système pour maintenir une plaque de diaphragme selon la revendication 9, dans lequel ledit moyen comporte une interface intermédiaire (110) située dans lesdites gorges (112) et en butée contre au moins une portion (78) de ladite circonférence extérieure en saillie.

31. Système pour maintenir une plaque de diaphragme selon la revendication 30, dans lequel ledit moyen comporte une interface intermédiaire (110) située dans lesdites gorges (112) et en butée contre ladite ouverture intérieure (51) dudit dispositif de support de plaque.

32. Système pour maintenir une plaque de diaphragme selon la revendication 31, dans lequel ladite interface intermédiaire (110) se compose d'une substance dure.

33. Système pour maintenir une plaque de diaphragme selon la revendication 32, dans lequel ladite substance dure est en métal.

34. Système pour maintenir une plaque de diaphragme selon la revendication 32, dans lequel ladite interface intermédiaire est en plastique.

35. Système pour maintenir une plaque de diaphragme selon la revendication 32, dans lequel ladite ouverture intérieure (51) est en butée contre ladite interface intermédiaire (110).

36. Système pour maintenir une plaque de diaphragme selon la revendication 35, dans lequel ladite ouverture intérieure (51) comporte un diamètre interne alésé précisément.

37. Système pour maintenir une plaque de diaphragme selon la revendication 30, dans lequel lesdites gorges (112) comportent des trous.

38. Système pour maintenir une plaque de diaphragme selon la revendication 37, dans lequel ladite interface intermédiaire (110) est située dans au moins trois desdits trous.

39. Système pour maintenir une plaque de diaphragme selon la revendication 37, dans lequel ladite interface intermédiaire (110) est située dans au moins quatre desdits trous.

40. Installation de diaphragme selon la revendication 23, dans laquelle ledit moyen comporte un moyen intermédiaire (110) en butée contre ladite circonférence extérieure exposée (62) de ladite plaque de diaphragme et ladite ouverture intérieure (51) dudit dispositif de support de plaque.
